# EUROPEAN PATENT SPECIFICATION

(11) **EP 3 304 710 B1**
(45) Date of publication and mention of the grant of the patent: **16.09.2020**
(21) Application number: 16729227.5
(22) Date of filing: 07.06.2016
(51) Int. Cl.: H02M 1/12, H02M 7/49, H02M 1/00, H02M 1/32

(54) **MODULAR MULTILEVEL CONVERTER WITH CASCADED H-BRIDGES AND PHASE-SHIFTED TRANSFORMER GROUPS**
MODULARER MEHRPUNKTUMRICHTER MIT KASKADIERTEN H-BRÜCKEN UND TRANSFORMATORGRUPPEN MIT PHASENVERSATZ
CONVERTISSEUR MODULAIR MULTI-NIVEAUX AVEC PONT-H EN CASCADE ET GROUPES DE TRANSFORMATEUR AVEC DÉCALAGE

(30) Priority: 08.06.2015 EP 15170989
(43) Date of publication of application: 11.04.2018
(73) Proprietor: ABB Schweiz AG, 5400 Baden (CH)
(72) Inventor: SENTURK, Osman, 2583 Den Haag (NL); CAGIENARD, Raphael, 5430 Wettingen (CH); ALVAREZ, Silverio, 5405 Baden Dättwil (CH)
(74) Representative: Kransell & Wennborg KB
(86) International application number: PCT/EP2016/062831
(87) International publication number: WO 2016/198370

(56) References cited:
- EP-A2- 2 587 658
- EP-A2- 2 782 240
- CN-A- 110 635 744
- CN-B- 102 158 097
- US-B1- 6 229 722
- US-B1- 6 320 767

## Description

### FIELD OF THE INVENTION

The invention relates to the field of cancellation of harmonics in electrical converter systems. In particular, the invention relates to a converter system having a special transformer for minimising the input harmonics, especially when redundancy at converter cell level is applied.

### BACKGROUND OF THE INVENTION

A special type of converter system is a so-called cascaded H-bridge converter system, in which converter cells connected in series at their output are connected at their inputs to secondary windings of a transformer. For example, such converter systems are used for a subsea drive, in which the converter system may be arranged offshore under water, for example near a pump or similar equipment. Such subsea systems require high reliability with long maintenance times (up to 5 to 7 years), and consequently the minimization of components and the application of redundancy may be one of the key concerns.

When a multi-pulse transformer is used in such a cascaded H-bridge converter system, which transformer having several secondary windings providing different phase-shifts, this may allow obtaining low current total harmonic distortion (THD) values.

For example, US 5,625,545 and EP 0 913 918 A2 show converter systems, in which the converter cells of one phase are connected to secondary windings providing a different phase-shift for every converter cell.

However, developing multi-pulse transformers generating well defined phase-shift angles between the multiple three-phase systems provided on the secondary windings of the transformer may require the application of complicated winding strategies (Zig-zag, Poligon, etc.). Such winding strategies may lead to different secondary associated short-circuit impedances due to the different coupling factor between the primary and secondary windings and even the coupling among the secondary windings. Such a difference on the coupling factors and the equivalent short-circuit impedances for each secondary winding can lead to ineffective harmonics cancellation on the transformer primary side, different DC link voltages associated to each DC link and different harmonic currents for the DC link capacitors. Accordingly, several design measures (DC link capacitors current rate increase, secondary windings voltage modification, etc.) need to be taken in order to cope and overcome these issues, which become more complicated with the increasing number of secondary windings.

Even with a high number of converter cells and correspondingly transformer secondary windings, the current harmonics cancellation may be practically limited by the transformer design (coupling factors between windings, number of turns difference, etc.).

Additionally, in the case one of the converter cells fails, when redundancy at converter cell level is provided, the input of the converter cell may be disconnected from its corresponding transformer secondary and the output of the converter cell may be shortcircuited. In such a case, the converter operation may continue even at nominal conditions. Also, even if the converter cells are fully operative, a cell stand-by strategy may be applied (N+0 operation) to minimize the total losses of the converter system and to increase the reliability of the converter system. However, in the case of one or more defective converter cells, which are disconnected from the transformer, the effective number of secondary windings of the multi-pulse transformer is reduced compared to the full operation and consequently the harmonics cancellation may be affected, leading to higher current THD.

EP 2 587 658 A2 discloses a converter system, comprising: a plurality of converter cells, each converter cell being adapted for converting an AC cell input voltage into a cell output voltage; a transformer with a plurality of secondary windings, each secondary winding connected with one converter cell and providing the AC cell input voltage of the one converter cell. The secondary windings are arranged into at least two groups and the converter cells connected to one group are series-connected.

US 6,229,722 B1 discloses amongst others a converter system with 3 phase groups each comprising 3 converter cells. The inputs of the different phase groups are phase shifted to each other while the inputs within each group are not phase-shifted with respect to each other.

CN102158097B discloses amongst others a converter system with 3 phase groups each comprising 9 converter cells which receive 3 voltages with different phases. In a system with 6 converter cells each cell receives an input voltage with a different phase. It does not disclose a phase shift between the input voltages of the different phase groups.

Furthermore, EP 2 782 240 A2 discloses a multilevel inverter and power cells in which a power cell switching circuit is selectively disconnected from the power cell output, and a bypass which is closed to connect first and second cell output terminals to selectively bypass a power stage of a multi-level inverter, with an optional AC input switch to selectively disconnect the AC input from the power cell switching circuit during bypass.

### DESCRIPTION OF THE INVENTION

It is an objective of the invention to provide a simple and robust converter system, which has a low THD even in the case, when one or more converter cells fail and/or when a redundancy at converter cell level is provided.

This objective is achieved by the subject-matter of the independent claim 1. Further exemplary embodiments are evident from the dependent claims and the following description.

The invention relates to a converter system, for example based on a cascaded H-bridge converter, which is connected to a multi-pulse transformer. The converter system may be adapted for operating subsea, for example may comprise a housing withstanding a subsea pressure and/or hermitically sealed with respect to sea water. The converter system may be a medium voltage system, which, for example, may be adapted to process voltages of more than 1 kV.

According to an embodiment of the invention, the converter system comprises a plurality of converter cells, each converter cell being adapted for converting an AC cell input voltage into a cell output voltage; and a transformer with a plurality of secondary windings, each secondary winding connected with one converter cell and providing the AC cell input voltage of the one converter cell. The secondary windings are arranged into at least two groups and the converter cells connected to one group are series-connected; wherein the transformer is designed such that the secondary windings of different groups provide AC cell input voltages that are phase-shifted with respect to each other, such that higher order harmonics generated by the converter cells cancel each other; and wherein the secondary windings of one group provide AC cell input voltages with at least two equal phase-shifts.

It has to be understood that since each secondary winding is associated with one converter cell, the group of secondary windings may also be seen as a group of converter cells. These groups of secondary windings/converter cells may either be used for providing the phases of the output voltages of the converter system or may be series-connected for providing one output phase.

Since the converter system comprises secondary windings that provide phase-shifted AC converter cell voltages for different groups, it is possible to lower the THD of the overall system. Additionally, in order to keep the transformer complexity reduced, each group of converter cells only may be associated with one phase-shift with respect to the other groups or with only two phase-shifts. Also in this case, it is possible to reduce the THD of the converter system, even in the case, when redundant cells are disconnected from the transformer.

According to the invention, for each group of K≥3 converter cells the secondary windings of one group provide AC cell input voltages with two different phase-shifts in order to minimize the transformer complexity.

According to an embodiment of the invention, each group of converter cells comprises at least one redundant converter cell. One or more or all converter cells of a group may be redundant, i.e. may be disconnected from or connected to the group, while the converter system is still operable. Redundancy may be applied at cell level.

In particular, the phase-shift angles between the different transformer secondary windings of different groups may be selected to guarantee an adequate transformer input current THD when the converter system operates with all the converter cells intended to provide redundancy at cell level (N+1 operation), but also when the application of the redundancy concept / strategy is required with some non-working and/or failed converter cells on some of the different drive phases (N+0 operation). The design complexity of the transformer is minimized by using at least two secondary windings with the same phase-shift angles in a group. This may also minimize an asymmetry between the secondary windings of the transformer in terms of short-circuit impedance.

Thus different redundancy concepts may be applied to the converter system. For example 1, 2, 3, etc. redundant converter cells may be considered per group (N+1 operation, N+2 operation, N+3 operation, etc.).

Furthermore, it also may be possible that all converter cells are used in normal operation (N+0 operation) to save losses in the converter and minimize the stress / increase the reliability of the converter. In this case, even when one or more converter cells fail, the THD may be kept at a low level.

In particular for a subsea drive with such a converter system, where reliability may be a key concern, the converter system may provide redundancy of the entire rectification - inversion stage, when modular converter cells are used (for example with N+1 operation redundancy application at cell level). These modular converter cells may comprise medium voltage components.

The transformer may have one primary winding and one common core for the primary winding and the secondary windings. As the input of the transformer at the primary winding as well as the output of the secondary windings may be multi-phase (in particular three-phase), the primary winding and/or the secondary windings each may have multiple one-phase windings.

According to an embodiment of the invention, the system comprises M groups of secondary windings, M being an integer, and a phase-shift between AC cell input voltages of different groups is 60°/M. In the case, the groups are providing the phases of the output of the converter system, M usually may be 3. In this case of M=3, the phase-shift between AC cell input voltages of different groups may be 20°.

It has to be understood that in the case, when there is also a phase-shift between AC cell input voltages of one group, there also may be phase-shifts different from 60°/M between groups.

According to an embodiment of the invention, the number of different phase-shifts is a multiple of M. When counting all possible phase-shifts provided by the secondary windings (independent of the groups), there are 2M phase-shifts.

According to an embodiment of the invention, a phase-shift between AC cell input voltages of the secondary windings of one group is 30°. There are two types of secondary windings per group, which provide AC cell input voltages phase-shifted by 30° between these two types.

According to an embodiment of the invention, each group comprises two, three or four secondary windings and converter cells.With medium voltage semiconductors, only a low number of converter cells per group may be used for generating the needed output voltage of a medium voltage converter system. However, higher number of secondary windings and converter cells could be also applied according to the output voltage.

Summarized, the secondary windings are arranged on M groups of secondary windings (for example the number of inverter phases M ≥3), wherein each group of secondary windings contains K secondary windings (for example the number of converter cells per converter phase K ≧ 3). The number X of phase-shifting angles θ may be selected to be a multiple Y of the M groups (X=Y*M), where the number of phase-shift angles to be assigned to each one of the M sets of the secondary windings is Y = 2. The phase-shift between the secondary windings of a group may be θ_{Y}=60°/Y and the shift between adjacent groups of secondary windings may be θ_{X}=60°/M).

According to an embodiment of the invention, the converter cells of one group are series-connected such that two directly connected converter cells have the same phase-shift in their AC cell input voltages. For example, in the case of three converter cells per group, two neighboring converter cells may have no phase-shift while the third converter cell is phase-shifted with respect to the two neighboring converter cells. In the case of four converter cells per group, there may be two pairs of neighboring converter cells, the converter cells of each pair not being phase-shifted but the pairs being phase-shifted.

According to an embodiment of the invention, the converter cells of one group are series-connected such that two directly connected converter cells have different phase-shifts in their AC cell input voltages. For example, the converter cells of different phase-shifts may alternate with respect to each other.

According to an embodiment of the invention, each group of series-connected converter cells provides a phase for a converter output voltage, i.e. one end of the group may provide an output of the converter system. Furthermore, the groups of series-connected converter cells may be star-connected or are delta-connected with their other ends.

According to an embodiment of the invention, the groups of series-connected converter cells are series-connected for providing one output phase. It also may be possible, that the converter system only has one output phase, AC or DC, which is generated by all converter cells of all groups connected in series.

According to an embodiment of the invention, each converter cell comprises a bypass switch, for example for and/or bypassing the converter cell from the converter system, when it has a failure. For providing redundancy, the converter system may disconnect each bypassed converter cell from its group.

According to an embodiment of the invention, the AC cell input voltage is a multi-phase (for example three-phase) voltage. I.e. each secondary winding may comprise a single winding for each phase.

Furthermore, the AC cell output voltage may be a single phase voltage and the converter output voltage may be a multi-phase (for example three-phase) voltage. The multi-phase voltage from a secondary winding may be converted into a single-phase voltage (of different frequency) by the corresponding converter cell, which are added to one phase of the converter output voltage.

According to an embodiment of the invention, each converter cell may comprise a (6 pulse) rectifier for rectifying the AC cell input voltage, each converter cell may comprise a DC link and each converter cell may comprise an (H-bridge) inverter for providing an AC cell output voltage. The converter cells may be indirect converter cells, with rectifiers connected to the secondary windings and output inverters that may be connected in series.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a converter system according to an embodiment of the invention.
Fig. 2 schematically shows a converter cell of the converter system of Fig. 1.
Fig. 3 schematically shows a converter system according to a further embodiment of the invention.
Fig. 4 schematically shows a converter system not falling into the scope of the claims.
Fig. 5 schematically shows a converter system according to a further embodiment of the invention.
Fig. 6 schematically shows a converter system not falling into the scope of the claims.
Fig. 7 schematically shows a converter system not falling into the scope of the claims.
Fig. 8 schematically shows a converter system not falling into the scope of the claims.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

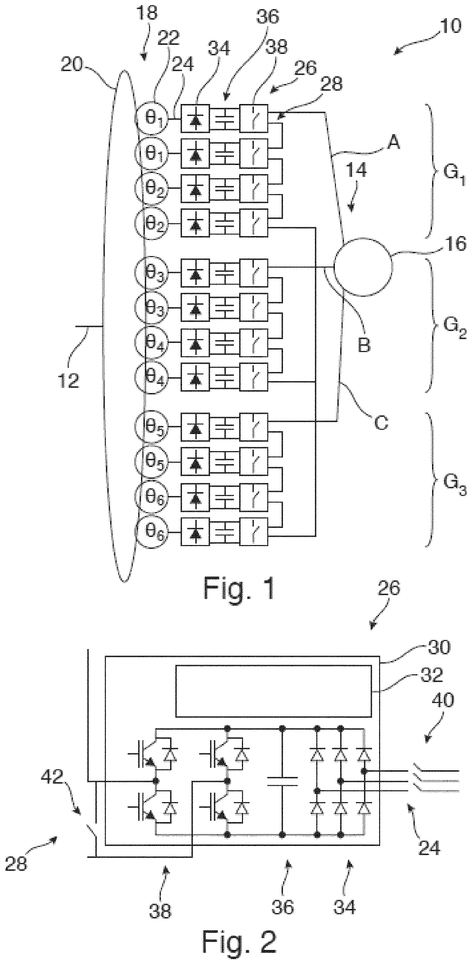

Fig. 1 shows a converter system 10 in the form of a cascaded H-bridge converter, which may be used for a subsea drive, for example to supply quadratic loads such as pumps and compressors with no regenerative requirements.

The converter system comprises a three-phase input 12 that may be connected to an electrical grid and a three-phase output 14 with phases A, B, C that may be connected to an electrical load 16, such as an electrical motor.

The input 12 is connected to a transformer 18 with a primary winding 20 and a plurality of secondary windings 22. Each of the secondary windings 22 has a three-phase output 24, which supplies a converter cell 26 with an AC cell input voltage. The secondary windings 22 and the converter cells 26 are grouped into three groups G₁, G₂, G₃ for each phase A, B, C. The converter cells 26 of each group are series-connected with their one-phase outputs 28 and each group G₁, G₂, G₃ of series-connected converter cells 26 provides at one end the phases A, B, C of the output 14 of the converter system 10. At the other ends, the groups G₁, G₂, G₃ of converter cells are star-connected.

Fig. 2 shows a converter cell 26. The components of the converter cell 26 may be arranged on a converter cell module 30, which also may comprise control components 32, such as a local cell controller, gate units and/or a fibre optical connection.

For converting the AC cell input voltage from the corresponding secondary winding 22 into an output current, each converter cell 26 comprises a passive 6-pulse rectifier 34, a DC link 36 and an inverter 38 with an H-bridge. The diodes of the rectifier 34 and the IGBTs of the inverter 38 may be medium voltage semiconductors (for example rated for 4.5 kV).

Furthermore, for bypassing a converter cell 26, each converter cell 26 may comprise a switch 40 for disconnecting the converter cell 26 from the corresponding secondary winding 22 and a bypass switch 42 for bypassing the converter cell 22 at its output 28.

A converter system 10 based on a cascaded H-bridge converter using medium voltage semiconductors has been considered as a good trade off in terms of complexity, reliability and performance for a subsea drive. For an output voltage in the 6.6 kV range, the converter system 10 may comprise 4 converter cells 26 per phase.

To avoid and/or minimize the above-described problems of multi-pulse transformers secondary windings asymmetries and current THD increase when applying redundancy at converter cell level, the transformer 18 is designed in a special way. The secondary windings 22 provide phase-shifts θ₁ to θ₆ in the AC cell input voltage, wherein there are phase-shifts between the groups G₁, G₂, G₃ of secondary windings 22 and there is a phase-shift between secondary windings within one group G₁, G₂, G₃.

It has to be noted that the absolute phase-shifts θ₁ to θ₆ may be provided with respect to an unshifted (three-phase) voltage, wherein the relative phase-shift between two secondary windings 22 may then be calculated as the difference of the corresponding absolute phase-shifts. All absolute phase-shifts θ₁ to θ₆ and relative phase-shifts may be provided as phase-shift angles, for example in degrees.

In the case of Fig. 1, the number of secondary windings is 12 for all the output phases (in the case N+1 operation), and 9 of them may be operative, if N+0 operation is applied in all phases. Redundancy operation may be applied in the following cases:
- One cell fails and the converter system 10 works without this converter cell 26. Hence, the converter output voltage capability with 11 operational converter cells 26 may be preserved maximally.
- After one cell failure, another converter cell 26 in a different output phase A, B, C fails and the converter system 10 works without these two converter cells 26. Hence, the converter output voltage capability with 10 operational converter cells 26 may be preserved maximally.
- One converter cell 26 per phase A, B, C fails and the converter system 10 works without these three converter cells 26. Hence, the converter may sustain the operation.
- One converter cell 26 fails and consequently all phases A, B, C are re-arranged to work with the same number of converter cells 26 per phase (3 converter cells 26 per phase A, B, C).
- 3 converter cells 26 per phase A, B, C are applied, wherein one converter cell 26 per phase A, B, C is configured in stand-by mode) in order to minimize the converter power losses, the corresponding additional thermal stress and increase the total converter reliability.

With 12 secondary windings 22 all having a different phase-shift, ideally up to 72 pulses may be applied. However, the practical harmonic cancellation in such a case is not easily to achieve. Furthermore, this will imply an increased complexity on the transformer design and manufacturing to practically provide the required 12 phase-shifts between the 12 three-phase secondary windings. Additionally, the operation with only down to 9 converter cells 26 in case of an N+0 operation may have impacts on the harmonic cancellation of such a transformer 18.

Thus, the 12 secondary windings 22 of the transformer 18 are arranged and designed taking into account the possible N+1 (12 converter cells) and N+0 (down to 9 converter cells 26) operation so that in any operation mode the current THD on the transformer input 12 is kept below required values. Specially, the N+0 mode with any configuration of non-working converter cells 26 in all the converter phases A, B, C is considered. It should be noted that in terms of THD, the case with 9 converter cells 26 is worse than the cases with 10 and 11 converter cells 26. Thus, in the following, only the case with 9 converter cells 26 is considered.

Fig. 1 shows a solution, in which the 12 secondary windings 22 are arranged with 6 phase-shifts θ_{X} as follows:
The 4 converter cells 26 of each phase A, B, C are supplied by 4 three-phase secondary windings 22 arranged with only 2 corresponding phase-shift angles (θ₁ and θ₂) as if they were to supply 2 times 12 pulse rectifiers, (θ₁-θ₂ = 30° equivalent to the classical D-Y configuration for a 12 pulse transformer). This implies that for each phase A, B, C, only two phase-shifts between the 4 corresponding secondary windings 22 are required having every two secondary windings 22 the same phase-shift angle (θ₁-θ₂ = θ₃-θ₄ = θ₅-θ₆ = 30°).

The secondary windings 22 with the same phase-shift angle may be practically wounded together with the corresponding insulation among the wires in order to make the secondary windings 22 as identical as possible to minimise the windings asymmetry.

The phase-shifts between the 4 secondary windings 22 related to one phase A, B, C with respect to the 4 secondary windings 22 related to another phase A, B, C correspond to the angles of the transformer 18 for an intended 18 pulse rectifier (θ₁=-20°, θ₃=0°, θ₅=20°).

With such a configuration of secondary windings 22 and from the current THD point of view, in N+1 operation, the 4 secondary windings 22 related to each phase A, B, C behave as a transformer for a 12 pulse rectifier, and the total 12 secondary windings 22 as a transformer for a 36 pulse rectifier. In the case of N+0 operation, the 3 operative secondary windings 22 of each phase A, B, C do not provide an operation equivalent to a transformer for a 12 pulse rectifier but an improved operation of a 6 pulse rectifier with reduced 5th and 7th harmonics. For all three phases A, B, C, the behaviour from the current THD at the input 12 of the converter system 10 is always that of a transformer for an 18 pulse rectifier whatever the adopted converter cell configuration is (such as random bypassed converter cells).

Additionally, the phase-shifts θ₁ to θ₆ of the 12 secondary windings 22 are selected to minimize the number or required phase-shift angles among the different 3 phase systems which may help to ease the mechanical design of the windings, minimizing the short-circuit impedance asymmetries among them.

Fig. 1 only shows an example, how the phase-shifts θ₁ to θ₆ may be arranged to achieve the desired THD when operating in the N+1 and the N+0 operation modes.

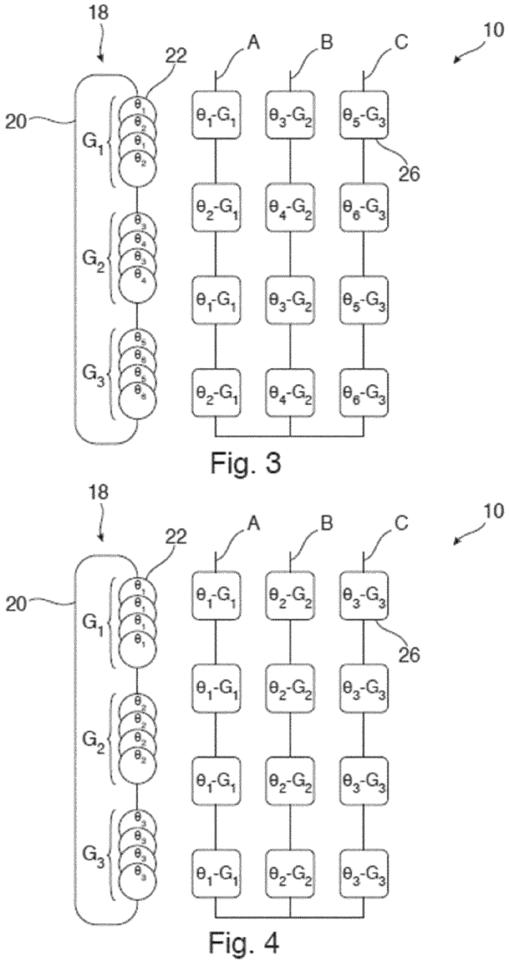

The following Fig. 3 to 8 show other configurations of converter systems 10, in which the above principles have been applied.
Only those examples that comprise all the features of the independent claims are part of the invention and thus embodiments of the invention.

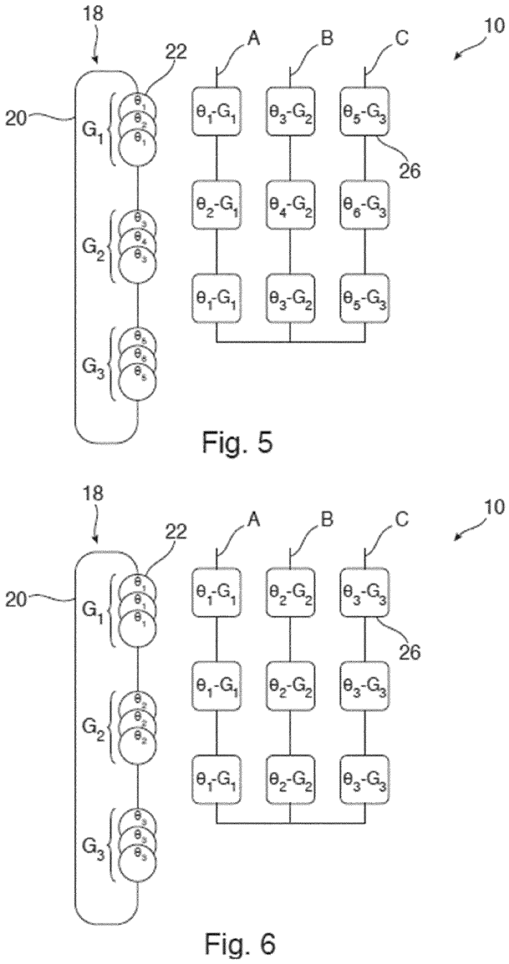

Therefore only figures 3 and 5 show embodiments, while figures 4, 6, 7 and 8 show examples not falling in the scope of the claims. Note that the connections between the secondary windings 22 and the converter cells 26 have been omitted for reasons of clarity. In each secondary winding 22, the corresponding absolute phase-shift θ_{X} is depicted. Each converter cell 26 also shows the corresponding absolute phase-shift θ_{X} and the group G₁, G₂, G₃ to which it belongs.

In Fig. 3, 5, 7, configurations with four, three and two secondary windings 22 and converter cells 26 per phase A, B, C (or group G₁, G₂, G₃) are shown, which have two different phase-shifts per phase (or group). Note that in Fig. 3, the converter cells 26 belonging to different phase-shifts are series-connected in an alternating way, while the converter cells 26 in Fig. 1, which are belonging to the same phase-shift are neighbouring in the series-connection.

It is also possible to reduce the number of phase-shifts even more by having only one phase-shift per per phase A, B, C or group G₁, G₂, G₃. Fig. In Fig. 4, 6, 8 configurations with four, three and two secondary windings 22 and converter cells 26 per phase A, B, C (or group G₁, G₂, G₃) are shown, which have only one phase-shifts per phase (or group).

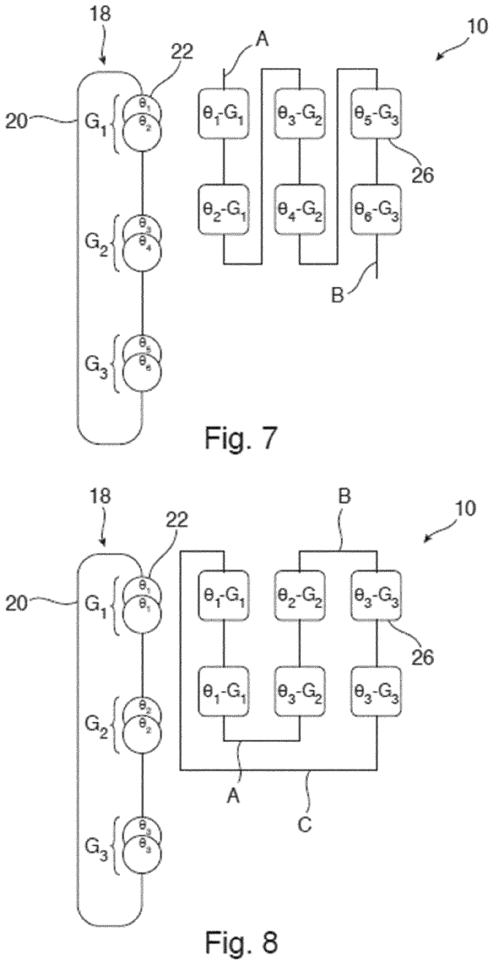

It has to be noted that the above discussion also do apply to groups G₁, G₂, G₃ of secondary windings 22 and converter cells 26, which are not directly associated with an output phase A, B, C of the converter system 10. For example, Fig. 7 shows that the groups G₁, G₂, G₃ are series-connected to form a single-phase output 14. Fig. 8 shows that the groups G₁, G₂, G₃ may be delta-connected. In Fig. 1, 3, 4, 5 and 6, the groups G₁, G₂, G₃ are star-connected at one end to form the phases A, B, C.

In general, the following rules apply for all the configurations shown in Fig. 1 and 3 to 8:
The secondary windings 22 are grouped in groups (such as G₁, G₂, G₃) of secondary windings 22 supplying the converter cells 26, which are series-connected. With M the number of output phases (M=3 for three phases A, B, C), there will be M groups of secondary windings 22.

Each group contains K≥2 converter cells 26, (K being an even or odd integer), so that at least redundancy N+1 at cell level per group can be applied, (also higher redundancy levels could be applied, N+1, N+2, etc., when there is a corresponding number K of converter cells 26).

The number X of phase-shifts θ_{X} is selected to be a multiple Y of the M number of groups (X=Y*M). For M=3, the number X of phase-shifts is considered to be effectively limited to a maximum of X=6 in order to minimize the complexity of the transformer design and/or to minimize the short-circuit impedance asymmetries among the different secondary windings 22. Consequently, the maximum number X of phase-shifts θ_{X} per secondary windings 22 may be practically limited to Y=1, 2 although theoretically Y could be a higher integer value as long as the transformer complexity and its implications are affordable.

The number of phase-shifts θ_{X} to be assigned to each one of the M groups of secondary windings 22 is Y. The phase-shift difference (displacement) between the secondary windings 22 of each group is θ_{Y}=60°/Y. If Y is 1, θ_{Y}=60° but there is only a single phase-shift, so practically θ_{Y} will not apply in this case.

The selection of the phase-shift displacement between adjacent groups of secondary windings 22 is to be selected so that in the case of loss of redundant converter cells 26 (N+0 redundancy application at cell level), the total rectifier (based on the rectifiers 34) of the converter system 10 will behave at least as an M*6 pulse rectifier. For M=3, the total rectifier will then behave in the worst case as an 18 pulse rectifier, (for M=4, at least as a 24 pulses rectifier). Consequently, the phase-shift difference between the adjacent groups of secondary windings is θ_{X}=60°/M).

The following table shows the explicit numbers calculated from the above considerations for all the configurations of Fig. 1 and 3 to 8 with three groups of secondary windings 22 / converter cells 26.

| | Y=2, X=6 phase-shifts | Y=1, X=3 phase-shifts |
|---|---|---|
| | θ_{Y}=60°/Y=30° | θ_{Y}=0° |
| | (\|θ₁-θ₂\| = \|θ₃-θ₄\| = \|θ₅-θ₆\| =30°) | (One phase-shift θ₁, θ₂, θ₃ per group) |
| | θ_{X}=60°/M)=20° | |
| | (\|θ₁-θ₃\| = \|θ₃-θ₅\| =20°) | θX=60°/M=20° |
| | | (\|θ₁-θ₂\| = \|θ₂-θ₃\| = 20°) |
| K=4, K*M = 12 converter cells 26 | Fig. 1, Fig. 3 | Fig. 4 |
| K=3, K*M = 9 converter cells 26 | Fig. 5 | Fig. 6 |
| K=2, K*M = 6 converter cells | Fig. 7 | Fig. 8 |

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. Any reference signs in the claims should not be construed as limiting the scope.

### LIST OF REFERENCE SYMBOLS

- 10: converter system
- 12: input
- 14: output
- 16: load
- 18: transformer
- 20: primary winding
- 22: secondary winding
- 24: output of secondary winding
- 26: converter cell
- 28: output of converter cell
- 30: cell module
- 32: cell controller
- 34: rectifier
- 36: DC link
- 38: inverter
- 40: disconnect switch
- 42: bypass switch
- A, B, C: output phase
- G₁, G₂, G₃: group
- θ₁, θ₂, θ₃, θ₄, θ₅, θ₆: phase-shift

## Claims

1. A converter system (10), comprising:
a plurality of converter cells (26), each converter cell (26) being adapted for converting an AC cell input voltage into a cell output voltage;
a transformer (18) with a plurality of secondary windings (22), each secondary winding (22) connected with one converter cell (26) and providing the AC cell input voltage of the one converter cell (26);
wherein the secondary windings (22) are arranged into at least two groups (G₁, G₂, G₃) and the converter cells (26) connected to one group (G₁, G₂, G₃) are series-connected;
wherein each group (G₁, G₂, G₃) comprises at least three secondary windings (22) and converter cells (26);
wherein the transformer (18) is designed such that the secondary windings (22) of different groups (G₁, G₂, G₃) provide AC cell input voltages that are phase-shifted with respect to each other, such that higher order harmonics generated by the converter cells (26) cancel each other;
wherein the secondary windings (22) of one group (G₁, G₂, G₃) provide AC cell input voltages with at least two equal phase-shifts (θ₁, θ₂, θ₃, θ₄, θ₅, θ₆) **characterized in that**
the secondary windings (22) of the one group (G₁, G₂, G₃) provide AC cell input voltages with two different phase-shifts (θ₁, θ₂, θ₃, θ₄, θ₅, θ₆).

2. The converter system (10) of claim 1,
wherein each group (G₁, G₂, G₃) of converter cells (26) comprises at least one redundant converter cell.

3. The converter system (10) of one of the preceding claims 1 to 2,
wherein the converter system (10) comprises M groups (G₁, G₂, G₃) of secondary windings (22), M being an integer, and a phase-shift between AC cell input voltages of different groups is 60°/M.

4. The converter system (10) of claim 3,
wherein the number of different phase-shifts is 2 times M.

5. The converter system (10) of one of claims 2 to 4,
wherein a phase-shift between AC cell input voltages of the secondary windings of one group (G₁, G₂, G₃) is 30°.

6. The converter system (10) of one of the preceding claims,
wherein the converter cells (26) of one group (G₁, G₂, G₃) are series-connected such that two directly connected converter cells (26) have the same phase-shift in their AC cell input voltages.

7. The converter system (10) of one of the preceding claims,
wherein the converter cells (26) of one group (G₁, G₂, G₃) are series-connected such that two directly connected converter cells (26) have different phase-shifts in their AC cell input voltages.

8. The converter system (10) of one of the preceding claims,
wherein each group (G₁, G₂, G₃) of series-connected converter cells (26) provides a phase (A, B, C) for a converter output voltage; and/or
wherein the groups (G₁, G₂, G₃) of series-connected converter cells (26) are star-connected or are delta-connected.

9. The converter system of one of claims 1 to 8,
wherein the groups (G₁, G₂, G₃) of series-connected converter cells (26) are series-connected for providing one AC or DC output phase.

10. The converter system (10) of one of the preceding claims,
wherein each converter cell (26) comprises an output bypass switch (40) and/or an input disconnect switch (40).

11. The converter system (10) of one of the preceding claims,
wherein the AC cell input voltage is a multi-phase voltage; and
wherein an AC cell output voltage is a single phase voltage; and
wherein a converter output voltage is a multi-phase voltage.

12. The converter system (10) of one of the preceding claims,
wherein each converter cell (26) comprises a rectifier (34) for rectifying the AC cell input voltage; and wherein each converter cell (26) comprises a DC link; and
wherein each converter cell (26) comprises an inverter (38) for providing an AC cell output voltage.

13. The converter system (10) of one of the preceding claims,
wherein the converter system is adapted for operating subsea.

## Patentansprüche

1. Umrichtersystem (10), das Folgendes umfasst:
mehrere Umrichterzellen (26), wobei jede Umrichterzelle (26) dazu angepasst ist, eine AC-Zelleneingangsspannung in eine Zellenausgangsspannung umzuwandeln;
einen Transformator (18) mit mehreren sekundären Wicklungen (22), wobei jede sekundäre Wicklung (22) mit einer Umrichterzelle (26) verbunden ist, und die AC-Zelleneingangsspannung der einen Umrichterzelle (26) bereitstellend;
wobei die sekundären Wicklungen (22) in mindestens zwei Gruppen (G₁, G₂, G₃) angeordnet sind und die Umrichterzellen (26), die mit einer Gruppe (G₁, G₂, G₃) verbunden sind, in Reihe verbunden sind;
wobei jede Gruppe (G₁, G₂, G₃) mindestens drei sekundäre Wicklungen (22) und Umrichterzellen (26) umfasst;
wobei der Transformator (18) so ausgestaltet ist, dass die sekundären Wicklungen (22) von unterschiedlichen Gruppen (G₁, G₂, G₃) AC-Zelleneingangsspannungen bereitstellen, die zueinander phasenverschoben sind, sodass Oberschwingungen höherer Ordnung, die durch die Umrichterzellen (26) erzeugt werden, einander aufheben;
wobei die sekundären Wicklungen (22) einer Gruppe (G₁, G₂, G₃) AC-Zelleneingangsspannungen mit mindestens zwei gleichen Phasenverschiebungen (θ₁, θ₂, θ₃, θ₄, θ₅, θ₆) bereitstellen, **dadurch gekennzeichnet, dass**
die sekundären Wicklungen (22) der einen Gruppe (G₁, G₂, G₃) AC-Zelleneingangsspannungen mit zwei unterschiedlichen Phasenverschiebungen (θ₁, θ₂, θ₃, θ₄, θ₅, θ₆) bereitstellen.

2. Umrichtersystem (10) nach Anspruch 1,
wobei jede Gruppe (G₁, G₂, G₃) von Umrichterzellen (26) mindestens eine redundante Umrichterzelle umfasst.

3. Umrichtersystem (10) nach einem der vorhergehenden Ansprüche 1 bis 2,
wobei das Umrichtersystem (10) M Gruppen (G₁, G₂, G₃) von sekundären Wicklungen (22) umfasst, wobei M eine ganze Zahl ist und eine Phasenverschiebung zwischen AC-Zelleneingangsspannungen von unterschiedlichen Gruppen 60°/M ist.

4. Umrichtersystem (10) nach Anspruch 3,
wobei die Anzahl von unterschiedlichen Phasenverschiebungen 2 mal M ist.

5. Umrichtersystem (10) nach einem der Ansprüche 2 bis 4,
wobei eine Phasenverschiebung zwischen AC-Zelleneingangsspannungen der sekundären Wicklungen einer Gruppe (G₁, G₂, G₃) 30° ist.

6. Umrichtersystem (10) nach einem der vorhergehenden Ansprüche,
wobei die Umrichterzellen (26) einer Gruppe (G₁, G₂, G₃) in Reihe verbunden sind, sodass zwei direkt verbundene Umrichterzellen (26) die gleiche Phasenverschiebung in ihren AC-Zelleneingangsspannungen haben.

7. Umrichtersystem (10) nach einem der vorhergehenden Ansprüche,
wobei die Umrichterzellen (26) einer Gruppe (G₁, G₂, G₃) in Reihe verbunden sind, sodass zwei direkt verbundene Umrichterzellen (26) unterschiedliche Phasenverschiebungen in ihren AC-Zelleneingangsspannungen haben.

8. Umrichtersystem (10) nach einem der vorhergehenden Ansprüche,
wobei jede Gruppe (G₁, G₂, G₃) von in Reihe verbundenen Umrichterzellen (26) eine Phase (A, B, C) für eine Umrichterausgangsspannung bereitstellt; und/oder
wobei die Gruppen (G₁, G₂, G₃) von in Reihe verbundenen Umrichterzellen (26) sternförmig oder deltaförmig verbunden sind.

9. Umrichtersystem nach einem der Ansprüche 1 bis 8,
wobei die Gruppen (G₁, G₂, G₃) von in Reihe verbundenen Umrichterzellen (26) in Reihe verbunden sind, um eine AC- oder DC-Ausgangsphase bereitzustellen.

10. Umrichtersystem (10) nach einem der vorhergehenden Ansprüche, wobei jede Umrichterzelle (26) einen Ausgangsumgehungsschalter (40) und/oder einen Eingangsumgehungsschalter (40) umfasst.

11. Umrichtersystem (10) nach einem der vorhergehenden Ansprüche,
wobei die AC-Zelleneingangsspannung eine mehrphasige Spannung ist; und
wobei eine AC-Zellenausgangsspannung eine einphasige Spannung ist; und
wobei eine Umrichterausgangsspannung eine mehrphasige Spannung ist.

12. Umrichtersystem (10) nach einem der vorhergehenden Ansprüche,
wobei jede Umrichterzelle (26) einen Gleichrichter (34) zum Gleichrichten der AC-Zelleneingangsspannung umfasst; und
wobei jede Umrichterzelle (26) eine DC-Verbindung umfasst; und
wobei jede Umrichterzelle (26) einen Wechselrichter (38) zum Bereitstellen einer AC-Zellenausgangsspannung umfasst.

13. Umrichtersystem (10) nach einem der vorhergehenden Ansprüche,
wobei das Umrichtersystem für Unterwasserbetrieb angepasst ist.

## Revendications

1. Système de convertisseur (10), comprenant :
une pluralité de cellules de conversion (26), chaque cellule de conversion (26) étant conçue pour convertir une tension d'entrée de cellules C.A. en une tension de sortie de cellule ;
un transformateur (18) doté d'une pluralité d'enroulement secondaires (22), chaque enroulement secondaire (22) étant connecté à une cellule de conversion (26) et fournissant la tension d'entrée de cellule C.A. de cette cellule de conversion (26) ;
dans lequel les enroulements secondaires (22) sont agencés en au moins deux groupes (G₁, G₂, G₃) et les cellules de conversion (26) connectées à un groupe (G₁, G₂, G₃) sont connectées en série ;
dans lequel chaque groupe (G₁, G₂, G₃) comprend au moins trois enroulements secondaires (22) et cellules de conversion (26)
dans lequel le transformateur (18) est conçu de telle sorte que les enroulements secondaires (22) de groupes différents (G₁, G₂, G₃) fournissent des tensions d'entrée de cellules C.A. qui sont déphasées les unes par rapport aux autres, de telle sorte que des harmoniques d'ordre supérieur générées par les cellules de conversion (26) s'annulent mutuellement ;
dans lequel les enroulements secondaires (22) d'un groupe (G₁, G₂, G₃) fournissent des tensions d'entrée de cellules C.A. présentant au moins deux décalages de phase égaux (Θ₁, Θ₂, Θ₃, Θ₄, Θ₅, Θ₆) **caractérisé en ce que** les enroulements secondaires (22) du groupe (G₁, G₂, G₃) fournissent des tensions d'entrée de cellules C.A. présentant deux déphasages différents (Θ₁, Θ₂, Θ₃, Θ₄, Θ₅, Θ₆).

2. Système de convertisseur (10) selon la revendication 1,
dans lequel chaque groupe (G₁, G₂, G₃) de cellules de conversion (26) comprend au moins une cellule de conversion redondante.

3. Système de convertisseur (10) selon l'une des revendications précédentes 1 à 2,
le système de convertisseur (10) comprenant M groupes (G₁, G₂, G₃) d'enroulements secondaires (22), M étant un entier, et un déphasage entre des tensions d'entrée de cellules C.A. de différents groupes étant 60°/M.

4. Système de convertisseur (10) selon la revendication 3,
dans lequel le nombre de déphasages différents est 2 fois M.

5. Système de convertisseur (10) selon l'une des revendications 2 à 4,
dans lequel un déphasage entre des tensions d'entrée de cellules C.A. des enroulements secondaires d'un groupe (G₁, G₂, G₃) est 30°.

6. Système de convertisseur (10) selon l'une des revendications précédentes, dans lequel les cellules de conversion (26) d'un groupe (G₁, G₂, G₃) sont connectées en série de telle sorte que deux cellules de conversion connectées directement (26) présentent le même déphasage de leur tension d'entrée de cellule C.A..

7. Système de convertisseur (10) selon l'une des revendications précédentes
dans lequel les cellules de conversion (26) d'un groupe (G₁, G₂, G₃) sont connectées en série de telle sorte que deux cellules de conversion connectées directement (26) présentent différents déphasages de leurs tensions d'entrée de cellules C.A..

8. Système de convertisseur (10) selon l'une des revendications précédentes,
dans lequel chaque groupe (G₁, G₂, G₃) de cellules de conversion connectées en série (26) fournit une phase (A, B, C) d'une tension de sortie de convertisseur ; et/ou
dans lequel les groupes (G₁, G₂, G₃) de cellules de conversion connectées en série (26) sont connectés en étoile ou connectés en triangle.

9. Système de convertisseur selon l'une des revendications 1 à 8,
dans lequel les groupes (G₁, G₂, G₃) de cellules de conversion connectées en série (26) sont connectés en série pour fournir une phase de sortie C.A. ou CC.

10. Système de convertisseur (10) selon l'une des revendications précédentes,
dans lequel chaque cellule de conversion (26) comprend un interrupteur de shuntage de sortie (40) et/ou un commutateur de déconnexion d'entrée (40).

11. Système de convertisseur (10) selon l'une des revendications précédentes,
dans lequel la tension d'entrée de cellule C.A. est une tension polyphasée ; et
dans lequel une tension de sortie de cellule C.A. est une tension monophasée ; et
dans lequel une tension de sortie de convertisseur est une tension polyphasée.

12. Système de convertisseur (10) selon l'une des revendications précédentes,
dans lequel chaque cellule de conversion (26) comprend un redresseur (34) pour redresser la tension d'entrée de cellules C.A. ; et
dans lequel chaque cellule de conversion (26) comprend une liaison C.C. ; et
dans lequel chaque cellule de conversion (26) comprend un onduleur (38) pour fournir une tension de sortie de cellule C.A..

13. Système de convertisseur (10) selon l'une des revendications précédentes,
le système de convertisseur étant conçu pour fonctionner sous l'eau.
